# EUROPEAN PATENT APPLICATION

(11) **EP 1 278 329 A2**
(43) Date of publication of application: **22.01.2003**
(21) Application number: 02255063.6
(22) Date of filing: 19.07.2002
(51) Int. Cl.: H04L 9/00, H04L 9/32

(54) **Improved cryptographic security system**

(30) Priority: 19.07.2001 GB 0117628
(71) Applicant: Collins, Mark, Edinburgh, EH8 9RB (GB); Senior, Jonathon, Edinburgh, EH8 1QT (GB)
(72) Inventor: Collins, Mark, Edinburgh, EH8 9RB (GB); Senior, Jonathon, Edinburgh, EH8 1QT (GB)
(74) Representative: McKechnie, Neil

(57) **Abstract**

This invention relates to a system that generates an output from an input by a cryptographic hash-based method. The method generates the output by reading from and writing to an intermediate storage medium, in accordance with an addressing schedule. The output can subsequently be validated, or can be used in the formation of an encryption/decryption key.

## Description

This invention relates to the field of cryptography and in particular relates to an input verification or user identification system.

Cryptographic hashes are an established technology and are frequently used in systems that are designed to restrict access to authorised personnel only. Cryptographic hashes are the basis of almost all secure password verification methods.

Secure password verification methods may be subject to attack by an unauthorised adversary wishing to gain access. Such attacks may involve a variety of different techniques, depending on the security system and the means available to the attacker. Unsophisticated attackers may use an exhaustive search of all the possible inputs to attempt to find the correct one. However, if physical access to the device can be obtained, more sophisticated attackers might use one of two strategies to overcome such security.

The first strategy is non-invasive and primarily aims to force errors in the way the process operates. Typically, such an attack involves permuting the inputs and the operating conditions of the system. Such attacks focus on either gaining information about the system by analysing its performance, or causing incorrect performance by manipulating the operating conditions of the system. All such attacks require operation of the process whilst the attack takes place, but do not necessarily require direct physical contact.

The second class of attacks involves physical invasion of the device and possible disassembly of the components. The aim of such an attack is to either extract vital information from the device, or to damage or otherwise change the system. This can either provide information about the correct input to the attacker, or delude the system into erroneously producing a correct output from an absent or incorrect input. All techniques in this class of attacks involve physical contact with the device itself.

Common techniques used to attack current technology include physical destruction of parts of the device, the introduction of "noise" into the system's operation, or the interruption of the system such that the security features are not triggered.

There exists a need for an improved security system that is less prone to the attacks described above, and it is therefore one aim of at least one embodiment of the invention to provide a verification method that obviates or mitigates one or more of the drawbacks associated with prior art systems.

It is one object of an embodiment of the invention to provide a verification system that prevents the "all-inputs" and non-invasive classes of attacks, and severely limits the options available to an attacker using alternative invasive techniques.

Further aims and objects of the invention will become apparent from the following description.

According to a first aspect of the invention, there is provided apparatus for generating a cryptographic key from an input by a user comprising:
- a data storage module;
- a processing module adapted to receive said input, read data from said data storage module in accordance with an addressing schedule, and generate a set of values based on the read data and the input;
- means for hashing said set of values in accordance with a cryptographic schedule, to provide hashed data;
- means for writing to the data storage module, and;
- means for generating an output from said hashed data and generating a key from said output.

According to a second aspect of the invention, there is provided apparatus for controlling access to secure data by verifying an input by a user comprising:
- a data storage module;
- a processing module adapted to receive said input, read data from said data storage module in accordance with an addressing schedule, and generate a set of values based on the read data and the input;
- means for hashing said set of values in accordance with a cryptographic schedule, to provide hashed data;
- means for writing to the data storage module, and;
- means for generating an output from said hashed data and validating the output against a set of stored access conditions.

According to a third aspect of the invention, there is provided apparatus for controlling access to secure data by generating an output from an input by a user comprising:
- a data storage module;
- a processing module adapted to receive said input, read data from said data storage module in accordance with an addressing schedule, and generate a set of values based on the read data and the input;
- means for hashing said set of values in accordance with a cryptographic schedule, to provide hashed data;
- means for writing to the data storage module, and;
- means for generating an output from said hashed data.

Preferably, the addressing schedule is adapted to determine a set of initial read addresses of a data storage module from which data are read, and is further adapted to write data to a set of write addresses of the data storage module, where the write addresses are distinct from the initial read addresses.

The addressing schedule may be adapted to determine the set of initial read addresses by performing hash-based transformations of the input.

Alternatively the addressing schedule may be adapted to determine the set of initial read addresses by a precalculated mapping using the input as a starting point.

According to a fourth aspect of the invention, there is provided a method for generating a cryptographic key from an input by a user, the method comprising the steps of:
A) receiving an input;
B) reading data from a data storage module in accordance with an addressing schedule;
C) generating a set of values based on the read data and the input;
D) hashing said set of values to provide hashed data;
E) writing to the data storage module, and;
F) generating an output based on said hashed data and generating a key from said output.

According to a fifth aspect of the invention, there is provided a method for controlling access to secure data by verifying an input by a user, the method comprising the steps of:
A) receiving an input;
B) reading data from a data storage module in accordance with an addressing schedule;
C) generating a set of values based on the read data and the input;
D) hashing said set of values to provide hashed data;
E) writing to the data storage module, and;
F) generating an output based on said hashed data and validating the output against a set of stored access conditions.

According to a sixth aspect of the invention, there is provided a method for controlling access to secure data by generating an output from an input by a user, the method comprising the steps of:
A) receiving an input;
B) reading data from a data storage module in accordance with an addressing schedule;
C) generating a set of values based on the read data and the input;
D) hashing said set of values to provide hashed data;
E) writing to the data storage module, and;
F) generating an output based on said hashed data.

The method may comprise the additional step of using the input to determine a set of initial read addresses of a data storage module, and at Step E, data is written to a set of write addresses of the data storage module, where the write addresses are distinct from the initial read addresses.

The step of determining the set of initial read addresses may be carried out by performing hash-based transformations of the input.

Optionally, the step of determining the set of initial read addresses may be carried out by a precalculated mapping using the input as a starting point.

The set of values may be generated by substituting values from the input with data read from the storage module.

Conveniently, the data written to the data storage module is derived from the hashed data.

Prior to the generation of an output, the method may comprise the further steps of:
(i) determining a further set of read addresses from the hashed data;
(ii) creating a further set of values by reading data from the further set of read addresses, and hashing the further set of values;
(iii) writing to a further set of write addresses of the data storage module, where the write addresses are distinct from the initial read addresses.

Optionally, prior to the generation of an output, Steps (i) to (iii) may be repeated.

Preferably the method is implemented by computer software comprising program instructions which, when loaded onto a computer, cause said computer to carry out the method.

This invention relates to a system that generates an output from an input by a cryptographic hash-based method. The method generates the output by reading from and writing to an intermediate storage medium, in accordance with an addressing schedule. The output can subsequently be validated, or can be used in the formation of an encryption/decryption key.

The system utilises a storage device capable of retaining information. This storage device contains values that are read and/or overwritten. The final output of the system is derived from these stored values, along with input data. The input is mapped to the output by first combining with data from the storage medium and utilising standard cryptographic hashes.

The design of the system is such that if the reading from the storage medium is chosen to be input dependent, then the additional data used in mapping the input to the output will also be input dependent. In addition, if the writing to the storage medium is input dependent, then the data that is stored in the storage medium is also input dependent. Thus, if both the reading from and writing to the storage medium are input dependent, then the system may operate such that information critical to the performance of the system is guaranteed to be destroyed if the system is provided with an incorrect input. Such behaviour will be referred to as 'data volatility' or being 'volatile'.

Furthermore, it is preferable to design the system such that the information that is used to create the output is removed after the output has been created and is only recreated on the provision of the correct input.

In this document, the following terms are defined.

### Addressing schedule

The manner in which the data is read from or written to a storage medium. The addressing schedule specifies where data is read from or written to in the storage medium.

### Cryptographic

Of or relating to the field of data obfuscation, or secret writing.

### Cryptographic hash

A transformation of information that is not known to have an inverse transformation.

### Cryptographic schedule

The manner in which hashes are applied to the data, this schedule specifies what kind of hash to apply and to which data.

### Hash (noun)

A transformation, typically non-trivial to invert. Ideally, such a transformation is a unique one-to-one mapping, for cryptographic purposes it is sufficient that the transformation possesses pre-image and second pre-image resistance and it is infeasible to compute collisions. Examples of such hashes include MD5, SHA-1, and any encryption where the key is withheld.

### Hash (verb)

The action or process of transforming data to an unreadable state, typically by use of a cryptographic process.

### Key

A unique value used as one of the inputs to a cryptographic process. The key is required for the encryption and decryption of the data; otherwise, the data is irrecoverable unless the cryptographic process used to secure it is broken.

### BRIEF DESCRIPTION OF THE DRAWINGS

In order to provide a better understanding of the present invention, embodiments of the invention will now be described, by way of example only, and with reference to the accompanying Figure, in which:

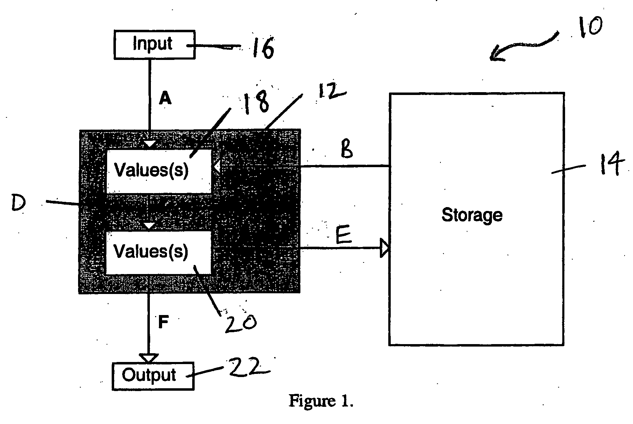

Figure 1 illustrates, in schematic form, the system in accordance with an embodiment of present invention.

### DETAILED DESCRIPTION

The present invention generates a unique output from an input, where the functionality of the system is dependent upon the state of the storage medium. The only plausible attack against this system involves the extraction of all the information from this storage medium without the operation of the system. If successful, this would then permit an exhaustive input search to be conducted, typically on a simulation of the system.

Figure 1 shows the system 10 including a processing module 12 and a data storage module 14. An example of a method that could achieve data volatility follows. However, this is a description of the basic system; it is not the only application of this method.

At Step A, input 16 is received into the processing module 12.

At Step B, the processing module reads data from the data storage module 14. An addressing schedule running on the processing module determines from which addresses within the data storage module 14 the data is read. The addressing schedule may be predetermined, or may be calculated from the input, as described later.

At Step C, the processing module 12 generates a data set based on both the input and the data read from the storage module. This may involve the substitution of some of the input data with the read data. As an alternative, the input data and the read data may be combined. This data set is shown at 18.

At Step D, the data set 18 is hashed, to form hashed data 20. The processing module includes a cryptographic schedule, part of whose function is to determine the manner in which the data is hashed. The cryptographically hashed data is a unique result and depends on both the input and the read data. This hashed data is later used to generate an output 22, which may be used to form a cryptographic key (Step F).

At Step E, data is written to the data storage module, thereby changing its data content. The manner in which data is written is controlled by the addressing schedule, which includes a number of rules for reading, writing, and dealing with collisions. The data written to the storage module could conveniently be derived from the hashed data 20, although this is not essential.

As explained above, the output generated from the hashed data is dependent on the content of the data storage module. It follows therefore, that the writing of data to the storage module at Step E could affect subsequent operation of the system. Specifically, if Step E overwrites data that is read during a subsequently carried out Step B, a different set of data 18 would be generated, and thus a different hashed data set 20. This provides an opportunity to prevent the system from generating a correct output the next time it is executed, irrespective of the input. Depending on the cryptographic hashes used, the output can be generated with high probability, or certainty that it is incorrect.

It can be ensured that this volatility does not occur for the correct input, and indeed to design the system to achieve irreversible monostable, or even polystable characteristics, as will be later described.

It is this potential for overwriting the values that are required for correct functioning of the system that is exploited. The system cannot be operated unless the correct input is known, unless one has the ability to restore the values that are damaged by an incorrect operation.

The task of accurately obtaining the values held in the storage medium without operation of the device is realistically the only approach available to an attacker, and is susceptible to the same failure rate as all other physically invasive techniques.

It is important to note that the addressing schedules and cryptographic schedules referred to here may either be calculated from the input, for example by applying hash-based transformations to the input data and deriving addresses therefrom. Alternatively, they may be precalculated mappings that utilise the input data as a starting point for the mapping. In both cases, the results obtained will be relative to the input data. Furthermore, additional hashing steps could be used to further complicate the process.

There will now be described a more detailed embodiment of the invention, having particular operational characteristics.

In this example, the addressing schedule is input dependent. Thus, at Step B, the addresses of the data storage module from which data is read depend on the input data. That is, the processing module calculates a number of addresses to read from by a suitable transformation of the input data. Data is read from those selected addresses, and is combined with the input data (as described above in Step C) to generate data set 18. For the correct input, the same addresses are always read from. If the data held within those addresses has not been altered, the data set will always be the same.

Thereafter, Step D hashes the data set 18 to generate hashed data 20, from which an output is derived.

When the writing step, Step E, is carried out, the addressing schedule ensures that data is overwritten, but not at those addresses which have been used in determining the output of the system.

For a correctly entered input, data is read from certain pristine addresses, and used in the generation of an output. These pristine addresses remain untouched by the writing step.

However, for an incorrect input, different addresses are accessed, and the data read therefrom is used in the generation of an incorrect output. Moreover, the writing step does not avoid writing to the pristine locations used by the previous input to the device. Accordingly, the data held at these pristine addresses has a certain probability of being overwritten with a new data value. In subsequent executions of the system, when the correct input is entered, data from the pristine locations will be altered, and used to calculate the output (which will be incorrect). The entry of an incorrect input has therefore prevented the system from functioning properly.

The above-described embodiment is but one example. Various embodiments will utilise a schedule that involves extensive reading and overwriting of the storage medium and a cryptographic schedule that applies non-trivial mappings on the input. Furthermore, it is possible to implement the system such that it has different behaviours. For instance, the schedules have various different effects on the behaviour of the system, an extensive input dependent reading and overwriting schedule that overwrites the whole storage (perhaps repeatedly) except for the initially read values will result in total volatility. A schedule that preserves no values whatsoever would display pseudorandom output generation characteristics.

The security of the system is then solely dependent upon the security of the information stored upon the storage medium and so this system should be constructed using technologies proven to resist physical disassembly, such as a modern security processor.

### DETAILED DESCRIPTION OF THE PREFERRED EMBODIMENT

This system is ideally suited for data security where the physical safety of the device holding the information can not be assured. The device envisioned by the inventor is one that works in parallel with standard encryption and decryption methods to secure the information. In a typical data security scheme the secured information is decrypted upon provision of the correct key, which is usually derived from information held by the user. To protect the information against the kind of attacks mentioned above, it is envisioned that the actual key used for the encryption and/or decryption should be at least partially derived from the output of a volatile subsystem as described in this disclosure. Thus the provision of the correct input to the volatile subsystem is the only method by which the information could be accessed, and moreover the provision of an incorrect input changes the operation of the volatile system such that correct operation may not be restored without restoration of the volatile subsystem. Security of the data then rests entirely on the ability of an attacker to access the information used by the volatile subsystem.

The following embodiment described is specifically designed for use in security applications. In keeping with this theme, the following preferred embodiment described herein relates to the necessary considerations required to implement a polystable system on an MCS-51 architecture. The MCS-51 is a common 8-bit architecture used in several security processors, such as the Dallas 5002. The implementation of secure hashing algorithms using an 8-bit processor would be known to one skilled in the art, and the description assumes the possession of suitable functions capable of implementing a full hash algorithm and managing the memory. For reasons of code compatibility and memory considerations we recommend the use of an 80C52 series processor but any will suffice if it has enough RAM to implement the basic functions and access to a small amount (e.g. 2048 words) of storage. The inventors implemented the system on an Atmel AT89S8252.

Some notations are used throughout this description. The action of generating a hashed output from some data D shall be written h(D) and the result written Dₕ. Writing some data D into memory at a particular address A shall be written w(D,A), similarly reading from an address shall be denoted by r(A). Concatenation of two sequences a and b will be written a|b.

### Polystable implementation.

The following describes how to implement a two-pass volatile polystable verification system with a 128-bit block size using 2048 word 8-bit storage. This is circumstance when using the MD5 hash algorithm with an Atmel AT89S8252 processor. In this implementation writing and reading of the storage follows some simple rules:
- Reading:: Except when initialising, reading is only permitted from addresses that are marked as having been written to at least once.
- Writing:: Writing is only allowed to addresses that have been written to less than twice. When writing to an address a tag is modified to record the number of writes that have been performed.
- Collisions:: Attempted accesses to illegal addresses are resolved by incrementation of the address modulo 2¹¹ until a legal address is reached.

These properties enforce the polystability, and the collision resolution in combination with the maximum write-limit guarantees a two-pass behaviour. The following description is believed by the inventors to be the best for achieving polystable volatility and glitch resistance in a two-pass process on an 8-bit processor with 2048 words of storage and sufficient RAM. The values used here in this description are for illustrative purposes only, the differing properties of processors and the different objectives of the implementor may alter the specifics. Significant variations are discussed below.

Before use:
0. Randomise the contents of the storage. The inventors used subsamples of π but any high entropy number source could be used.

Initialisation:
1. Wait for signal to begin.
2. Upload input: D.
3. Copy D into an output storage module. This is a part of the memory that is to be updated during the iterative process, and is distinct from the data storage module (although may form part of the same physical device).
4. Calculate h(D) and use Dₕ to generate 16 different 11-bit addresses. One acceptable method is to split Dₕ into 16 pieces and generate an address from the hash of each piece.
5. Generate new 128-bit word from the contents of the data storage module at each of the 16 addresses. That is, generate a new D' = r(A₁)| ... |r(A₁₆). To prevent the data from being overwritten later, tag each of the 16 addresses as having been written to twice.

Repeated steps:
6. Calculate h(D').
7. Xor D'ₕ with the content of the output storage, and write the result to the output storage.
8. Calculate 16 new addresses A₁ ... A₁₆ from D'ₕ as before.
9. Split D'ₕ into 16 segments Dₕ₁ ... Dₕ₁₆.
10. Write each segment to storage at the corresponding address, i.e. for all i, w(Dₕᵢ,Aᵢ). Collision resolution and address tagging is performed as discussed above, to avoid overwriting the initially read values.
11. Calculate h(D'ₕ).
12. Calculate 16 addresses A₁ ... A₁₆ from D'ₕₕ.
13. Create a new D'' = r(A₁)| ... |r(A₁₆).
14. Repeat steps 6 to 13, until the entire memory is marked as being written to twice (254 iterations in this case).

Final steps:
15. Output the content of the output storage.
16. Zeroise the output storage.

In the above method, the output storage contains data that represents a "running total" of the iterations carried out. When all iterations have taken place, the output storage contains the final output of the system. The output storage is subsequently zeroised, to complicate the steps necessary for a successful invasive attack.

It is important to note that the Step 7 need not be an exclusive OR operation, but could be any operation that combines the recently hashed data with the present content of the output storage.

The result of performing this method on an input is to produce an output which is a cryptographic derivation of the input and the initially read values. The entirety of the storage with the exception of the initially read values has been overwritten twice. Furthermore, the addresses of the initially read values are input dependent, thus the probability of an incorrect password not overwriting at least one of the correct initial values is 16!/2048¹⁶. Overwriting a correct initially read value will result in data change (volatility) with a 255/256 chance. An attacker would thus be wise to not attempt to operate the method at all. Glitching the operation of the processor in an attempt to prevent data loss will result in an improper output generation since the correct output is extremely likely to incorporate elements of the storage that are ephemeral and generated from the input on the fly.

### Variations:

It is the preservation of the initially read values in a pristine state that allows polystability. Different inputs may preserve different values but the same input will always preserve the same values. Use of a different input stabilises the system around the new input. Output generation is consistent with the input. If the input should change, the output generation will change, but critically so will the content of the storage.

Importantly, returning to a previous input will not restore the storage state unless the initially read values were left untouched by operation with the 'wrong' input. This is rather unlikely, as discussed above. Thus changing the input will result in loss of the ability to generate a previous output, but not the ability to maintain the new input/output relationship.

If the initially read values are not protected at all from being overwritten the system is likely to alter an initial value during its operation. This will result in a different behaviour the next time it is operated, even for the correct input. Similarly if the initially read value is protected from uncontrolled writes but is altered in a known manner each time the system is operated (e.g. incremented modulo 256), the behaviour will change (in this example it would be cyclic with a period of 256).

Incrementation over the whole of the initially read values is also possible, in which case the system would be cyclic with the period of the initially read values, which in this example is 2¹²⁸.

Variations may also adopt different hashing and addressing schemes without detracting from the security of the system. By precalculating a relative addressing scheme suitable for a specific input, the device can be engineered to be stable only with that input and that storage state. Operation of the system with an incorrect input will alter the storage state and render the device unstable, it is extremely unlikely that the device will stabilise again, and it is even less likely that the correct output will ever be recovered. Such a system that is stable but once, is termed monostable.

The use of polystable mechanisms is advised for input verification and or key generation in monotonous applications such as hard drive encryption. Cyclic polystable systems, monostable systems or even totally unstable systems are useful for verification of identity. Their inherent defence against replay attacks is obvious, and such systems can be used for challenge-response applications where two devices are synchronised. A challenge consists of a demand for a result under certain circumstances, the response is correct if it is the same as generated by the challenging device under the same circumstances.

The present invention has a variety of applications, some of which are listed below.

Key generation: Hard Disk Drive/memory encryption. e.g. secure computers, e-cash cards, etc.

User validation: Identify Friend or Foe (IFF) e.g. IR remote locking/access, user presence and transaction verification (on biometric/secret inputs and pay per view TV cards). Applications also exist in the identification of mobile phone handsets.

### Advantages:

With respect to attacks, the present invention precludes non-invasive attacks, such as an exhaustive input search. The success of an exhaustive search would require success in physical extraction of large amounts of information from the system without the running of the system. This task of extracting the information can be made extremely difficult by use of physical security methods. It is in this manner that the best possible success rate of a physical attack can be made extremely low.

The overall success rate of an attack against this system is a product of the success rate of the physical penetration to retrieve the data and the subsequent exhaustive input search necessary to derive the correct functionality of the process. If the input is of sufficient complexity then this class of approach is also intractable. Given a sufficiently complex input, the system can be proven to be susceptible to neither of these classes of attack, and as currently there are no other zero information attacks, this system is provably secure.

Superficially, a similar performance to that provided by this invention could be obtained by using current technologies arranged so they activate a security process if the input is invalid. This is a naive method however, since the security of the process is not an inherent consequence of the normal operation of the process. This distinction permits an attacker to detect and invalidate or abort any attempt by the device to destroy critical information.

Embodiments of the invention are not susceptible to such attack since the normal operation of the process requires the overwriting of information. An attacker cannot distinguish between overwriting as part of a valid operation of the system, and that executed when the input is invalid, since there is no fundamental difference. An adversary therefore has no knowledge of when information is about to be overwritten outside of the normal operation of the process. Since the system is designed to require the overwriting of information as part of its normal operation, an attacker who can not access the internal information of the system has no better chance of success than a single attempt at guessing the input.

The application of the present invention forces the attacker to perform recovery of the complete memory space before attempting to break the system. This typically involves physical intervention, is time consuming and error prone, and only gains the attacker the ability to brute force the input space. Use of more than one device further complicates the attack. It is not possible to construct a more secure system without using a trusted third party (which is itself then a target for attack).

Any data security requires the existence of secret knowledge. To prevent brute forcing both the user and the device have secret knowledge, this situation is only maintainable through the use of physical security devices. Thus security processors should be used to raise the level of expertise and time required to access the state storage.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code of intermediate source and object code such as in partially compiled form suitable for use in the implementation of the processes according to the invention. The carrier may be any entity or device capable of carrying the program.

For example, the carrier may comprise a storage medium, such as ROM, for example a CD ROM or a semiconductor ROM, or a magnetic recording medium, for example, floppy disc or hard disc. Further, the carrier may be a transmissible carrier such as an electrical or optical signal which may be conveyed via electrical or optical cable or by radio or other means.

When the program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

Further modifications and improvements may be added without departing from the scope of the invention.

## Claims

1. Apparatus for generating a cryptographic key from an input by a user comprising:
- a data storage module;
- a processing module adapted to receive said input, read data from said data storage module in accordance with an addressing schedule, and generate a set of values based on the read data and the input;
- means for hashing said set of values in accordance with a cryptographic schedule, to provide hashed data;
- means for writing to the data storage module, and;
- means for generating an output from said hashed data and generating a key from said output.

2. Apparatus for controlling access to secure data by verifying an input by a user comprising:
- a data storage module;
- a processing module adapted to receive said input, read data from said data storage module in accordance with an addressing schedule, and generate a set of values based on the read data and the input;
- means for hashing said set of values in accordance with a cryptographic schedule, to provide hashed data;
- means for writing to the data storage module, and;
- means for generating an output from said hashed data and validating the output against a set of stored access conditions.

3. Apparatus for controlling access to secure data by generating an output from an input by a user comprising:
- a data storage module;
- a processing module adapted to receive said input, read data from said data storage module in accordance with an addressing schedule, and generate a set of values based on the read data and the input;
- means for hashing said set of values in accordance with a cryptographic schedule, to provide hashed data;
- means for writing to the data storage module, and;
- means for generating an output from said hashed data.

4. Apparatus as claimed in Claim 3 wherein the output is a cryptographic key.

5. Apparatus as claimed in Claim 3 further comprising means for validating the output against a set of stored access conditions.

6. Apparatus as claimed in any preceding Claim wherein the addressing schedule is adapted to determine a set of initial read addresses of a data storage module from which data are read, and is further adapted to write data to a set of write addresses of the data storage module, where the write addresses are distinct from the initial read addresses.

7. Apparatus as claimed in any preceding Claim wherein the addressing schedule is adapted to determine the set of initial read addresses by performing hash based transformations of the input.

8. Apparatus as claimed in any preceding Claim wherein the addressing schedule is adapted to determine the set of initial read addresses by a precalculated mapping using the input as a starting point.

9. A method for generating a cryptographic key from an input by a user, the method comprising the steps of:
A) receiving an input;
B) reading data from a data storage module in accordance with an addressing schedule;
C) generating a set of values based on the read data and the input;
D) hashing said set of values to provide hashed data;
E) writing to the data storage module, and;
F) generating an output based on said hashed data and generating a key from said output.

10. A method for controlling access to secure data by verifying an input by a user, the method comprising the steps of:
A) receiving an input;
B) reading data from a data storage module in accordance with an addressing schedule;
C) generating a set of values based on the read data and the input;
D) hashing said set of values to provide hashed data;
E) writing to the data storage module, and;
F) generating an output based on said hashed data and validating the output against a set of stored access conditions.

11. A method for controlling access to secure data by generating an output from an input by a user, the method comprising the steps of:
A) receiving an input;
B) reading data from a data storage module in accordance with an addressing schedule;
C) generating a set of values based on the read data and the input;
D) hashing said set of values to provide hashed data;.
E) writing to the data storage module, and;
F) generating an output based on said hashed data.

12. The method as claimed in any of Claims 9 to 11 comprising the additional step of using the input to determine a set of initial read addresses of a data storage module, and where at Step E, data is written to a set of write addresses of the data storage module, where the write addresses are distinct from the initial read addresses.

13. The method as claimed in Claim 12 wherein the step of determining the set of initial read addresses is carried out by performing hash-based transformations of the input.

14. The method as claimed in Claim 12 wherein the step of determining the set of initial read addresses is carried out by a precalculated mapping using the input as a starting point.

15. The method as claimed in any of Claims 9 to 14 Claim wherein the set of values is generated by substituting values from the input with data read from the storage module.

16. The method as claimed in any of Claims 9 to 15 wherein the data written to the data storage module is derived from the hashed data.

17. The method as claimed in any of Claims 9 to 16 wherein prior to the generation of an output, the method comprises the further steps of:
(i) determining a further set of read addresses from the hashed data;
(ii) creating a further set of values by reading data from the further set of read addresses, and hashing the further set of values;
(iii) writing to a further set of write addresses of the data storage module, where the write addresses are distinct from the initial read addresses.

18. The method as claimed in Claim 17 wherein prior to the generation of an output, Steps (i) to (iii) are repeated.

19. The method as claimed in any of Claims 9 to 18 wherein the method is implemented by computer software comprising program instructions which, when loaded onto a computer, cause said computer to carry out the method.
